# EUROPÄISCHE PATENTSCHRIFT

(11) **EP 2 685 194 B1**
(45) Veröffentlichungstag und Bekanntmachung des Hinweises auf die Patenterteilung: **10.09.2014**
(21) Anmeldenummer: 12176209.0
(22) Anmeldetag: 12.07.2012
(51) Int. Cl.: F27B 17/02, F27D 1/18, A61C 13/20

(54) **Ofenkopf-Schwenkmechanik**
Furnace head pivot mechanism
Mécanisme d'orientation d'une tête de four

(43) Veröffentlichungstag der Anmeldung: 15.01.2014
(73) Patentinhaber: Ivoclar Vivadent AG, 9494 Schaan (LI)
(72) Erfinder: Pokorny, Walter, 6719 Bludesch (AT)
(74) Vertreter: Splanemann

(56) Entgegenhaltungen:
- DE-A1-102004 049 888
- DE-C1- 19 542 984
- JP-A- 7 198 264
- US-A- 2 506 071

## Beschreibung

Die Erfindung betrifft einen Ofen, gemäß dem Oberbegriff von Anspruch 1.

Dental-brenn oder -pressöfen weisen typischerweise einen Ofenunterbau auf, auf ein Dentalrestaurationsteil abgelegt werden kann, und einen Ofenkopf, der im wesentlichen haubenförmig ausgebildet ist und auch die Heizung für die Brennkammer trägt.

Dentalöfen mit schwenkbarem Ofenkopf sind seit sehr langer Zeit bekann; als Beispiel hierfür sei die US-A-569 911 genannt.

Einen wesentlichen Fortschritt bei der Bedienbarkeit erbrachte die Lösung gemäß der DE 26 32 846 und der DE 102004049888, die sich durch eine flache und ebene Auflagefläche für das Dentalrestaurationsteil im Ofenunterbau auszeichnet. Derartige Lösungen weisen ein im rückwärtigen Bereich zwischen Unterbau und Kopf angebrachtes Gelenk mit einer Schwenkachse auf, die durch den Gelenklagerstift des dortigen Schwenkgelenks verläuft.

Um eine leichte Entnahme für den Zahntechniker, der den Ofen bedient, zu ermöglichen, muss der Kopf recht weit aufgeschwenkt werden, beispielsweise mit einem Schwenkwinkel von 35°, wie es aus der DE 195 42 984 C1 ersichtlich ist. Bei dieser Lösung ist zusätzlich ein Hublager vorgesehen, das ein zusätzliches Anheben um 30 mm ermöglicht, wobei diese Konstruktion jedoch vergleichsweise aufwändig ist.

Beim Abschluss eines Brennzyklusses wird der Brennofen geöffnet, indem der Ofenkopf nach oben geschwenkt wird. In diesem Zustand ist der Ofenkopf noch recht heiß. Er soll nach Möglichkeit nicht lange in geöffnetem Zustand verbleiben, denn ansonsten kühlt er aus und muss für den nächsten Brennzyklus erneut länger aufgeheizt werden. Daher ist es wichtig, dass der Zahntechniker rasch, und ohne dass eine Abkühlphase erforderlich wäre, die Dentalrestaurationsteile entnehmen kann. Um dies zu ermöglichen, verlangen die Zahntechniker, dass der Ofenkopf möglichst weit aufgeschwenkt wird. Ein weites Aufschwenken wirkt aber leider gerade so, dass die Bedienperson von der heißen Unterseite des Brennofenkopfes angestrahlt wird, was diese als unangenehm empfindet, so dass teilweise das Tragen von Schutzkleidung empfohlen wird, um die Gefahr von Verbrennungen zu reduzieren.

Demgegenüber liegt der Erfindung die Aufgabe zugrunde, einen Dental-brennofen oder -pressofen gemäß dem Oberbegriff von Anspruch 1 zu schaffen, der hinsichtlich der Bedienbarkeit verbessert ist.

Diese Aufgabe wird erfindungsgemäß durch Anspruch 1 gelöst. Vorteilhafte Weiterbildungen ergeben sich aus den Unteransprüchen.

Erfindungsgemäß ist es vorgesehen, mit einer besonderen Gelenkvorrichtung eine sogenannte virtuelle Schwenkachse zu schaffen, eine Schwenkachse also, die außerhalb sowohl des Ofenkopfes als auch der Gelenkvorrichtung selbst zu liegen kommt. Hierzu weist die Gelenkvorrichtung einen mit dem Ofenunterbau festen Schenkel und einen mit dem Ofenkopf festen - oder zumindest an diesem befestigbaren - Schenkel auf, dem Grunde nach wie die bekannten Dentalbrennöfen. Zusätzlich sind zwischen diesen jedoch zwei bewegliche Schenkel vorgesehen, und zwar übereinander. Diese vier genannten Schenkel sind an vier Gelenkachsen miteinander verbunden, so dass sie je nach Schwenkstellung eine Art Parallelogramm ergeben.

Während bei einem klassischen Brennofengelenk die Schwenkachse des Ofenkopfes durch die Gelenkachse, also den dort meist vorgesehenen Lagerstift, verläuft, erstreckt sich erfindungsgemäß die Schwenkachse weit außerhalb des Brennofens, an der dem Ofenkopf gegenüberliegenden Seite der Gelenkvorrichtung.

Die Schwenkachse ersteckt sich horizontal, also parallel zur Auflagefläche für die Dentalrestaurationsteile am Ofenunterbau.

Typischerweise entspricht der Abstand zwischen Schwenkachse und Gelenkvorrichtung etwa dem Durchmesser des Ofenkopfes.

Erfindungsgemäß lässt sich damit der Brennofen für die Entnahme der Dentalrestaurationsteile bei vergleichsweise geringem Schwenkwinkel weit aufschwenken. Der Abstand zwischen Ofenkopf und den Dentalrestaurationsteilen ist trotz des geringeren Schwenkwinkels größer, und die Bedienperson wird nahezu nicht von der heißen Ofenkopfunterseite angestrahlt. Vielmehr strahlt die Wärme nach unten, so dass sie im Ofenbereich verbleibt, und bei rascher Entnahme nur geringe Wärmeverluste entstehen.

Erfindungsgemäß ist es günstig, dass die Gelenkvorrichtung kompakt und überraschend preisgünstig hergestellt werden kann. Die Schenkel der Gelenkvorrichtung lassen sich als Stanzteile preisgünstig realisieren. Bevorzugt besteht die Gelenkvorrichtung aus zwei voneinander beabstandeten Gelenkanordnungen, die zueinander symmetrisch sind. Zwischen diesen kann sowohl eine Spannfeder aufgenommen werden, die der Kompensation des Gewichts des Ofenkopfes dient, als auch der Antriebsmotor für die elektromotorische Betätigung des Ofenkopfes. Überraschend lässt sich damit eine gegenüber den bekannten Brennofengelenken kompaktere Gelenkvorrichtung realisieren.

In vorteilhafter Ausgestaltung ist es vorgesehen, dass die Gelenkvorrichtung mindestens drei, insbesondere vier, gelenkig miteinander verbundene Schenkel aufweist und dass zwischen einander benachbarten Schenkeln eine erste, eine zweite, eine dritte und insbesondere eine vierte Gelenkachse (30, 32, 36, 38) ausgebildet ist.

In vorteilhafter Ausgestaltung ist es auch vorgesehen, dass die Gelenkvorrichtung mehrere Schenkel aufweist, von denen einer, der Rahmenschenkel, fest mit dem Ofenunterbau in Verbindung steht und an einem anderen, dem Kopfschenkel, der Ofenkopf befestigbar ist oder an diesem befestigt ist.

In weiterer vorteilhafter Ausgestaltung ist es vorgesehen, dass die Gelenkvorrichtung mehrere Schenkel aufweist, und dass ein mit dem Ofenkopf verbundener Kopfschenkel als der dem Ofenkopf zugewandter Schenkel ausgebildet ist.

In weiterer vorteilhafter Ausgestaltung ist es vorgesehen, dass die Gelenkvorrichtung mehrere Schenkel aufweist, die gelenkig miteinander verbunden sind, und dass ein unterbaufester Rahmenschenkel gelenkig mit zwei Zwischenschenkeln verbunden ist, wobei die Gelenkachsen zu diesen hin voneinander beabstandet sind, insbesondere in vertikaler Richtung beabstandet, und dass die anderen Gelenkachsen der Zwischenschenkel mit einem Ofenkopf-festen Schenkel verbunden sind.

In weiterer vorteilhafter Ausgestaltung ist es vorgesehen, dass die Gelenkvorrichtung zwei voneinander in horizontaler Richtung und insbesondere in der Richtung parallel zur Schwenkachse voneinander beabstandete Gelenkanordnungen aufweist, die je mehrere Schenkel aufweisen.

In weiterer vorteilhafter Ausgestaltung ist es vorgesehen, dass zwischen Gelenkanordnungen der Gelenkvorrichtung der Motor aufgenommen ist, mit welchem der Ofenkopf verschwenkbar ist.

In weiterer vorteilhafter Ausgestaltung ist es vorgesehen, dass in oder an der Gelenkvorrichtung eine Spannfeder aufgenommen ist, die gegen das Gewicht des Ofenkopfes wirkt und in an sich bekannter Weise dieses im wesentlichen kompensiert.

In weiterer vorteilhafter Ausgestaltung ist es vorgesehen, dass die Spannfeder aus zwei Einzel-Spannfedern besteht, die im Inneren der Gelenkvorrichtung aufgenommen sind, insbesondere zwischen den Anordnungen der Gelenkvorrichtung.

In weiterer vorteilhafter Ausgestaltung ist es vorgesehen, dass die Gelenkvorrichtung mehrere Schenkel aufweist, die in der Art eines konvexen Vierecks miteinander verbunden sind.

In weiterer vorteilhafter Ausgestaltung ist es vorgesehen, dass der Ofenkopf an der Gelenkvorrichtung lösbar befestigt ist und die Befestigung mit Hilfe von steckbaren Formteilen erfolgt, die über eine federbelastete Verriegelungsnase gesichert sind.

In weiterer vorteilhafter Ausgestaltung ist es vorgesehen, dass ein ofenkopffestes Formteil im wesentlichen die Form eines umgekehrten U aufweist, dessen Seitenschenkel in Schrägflächen auslaufen.

In weiterer vorteilhafter Ausgestaltung ist es vorgesehen, dass eine Abtriebswelle des Motors als Spindel ausgebildet ist und mit einem Schneckengetriebe zusammenwirkt, das seinerseits die Gelenkvorrichtung antreibt.

In weiterer vorteilhafter Ausgestaltung ist es vorgesehen, dass der Abstand der Schwenkachse von dem Ofengehäuse das 0,1 bis 2-fache der größten Länge des Ofengehäuses beträgt und/oder der Öffnungswinkel zwischen der Unterseite des Ofenkopfes und der Oberseite des Ofenunterbaus bei geöffnetem Ofenkopf 5° bis 20° beträgt.

Weitere Vorteile, Einzelheiten und Merkmale ergeben sich aus der nachfolgenden Beschreibung mehrerer Ausführungsbeispiele der Erfindung anhand der Zeichnung.

Es zeigen:
- Fig. 1: eine schematische Ansicht eines erfindungsgemäßen Pressofens in einer Ausführungsform;
- Fig. 2: eine schematische Ansicht eines Details eines herkömmlichen Brennofens, unter Darstellung der Gelenkvorrichtung;
- Fig. 3: eine schematische Darstellung eines Details eines erfindungsgemäßen Brennofens in einer weiteren Ausführungsform, ebenfalls unter Darstellung der Gelenkvorrichtung;
- Fig. 4: eine Darstellung einer weiteren Ausführungsform eines erfindungsgemäßen Bren nofens.

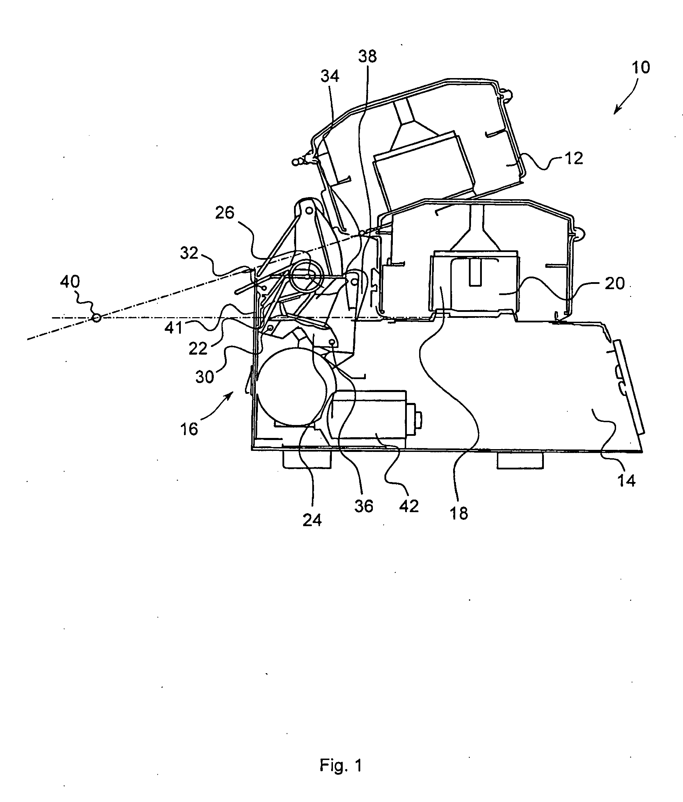

Der in Fig. 1 dargestellte erfindungsgemäße Brenn- oder Pressofen 10 ist in diesem Ausführungsbeispiel als Pressofen ausgebildet. Er weist einen Ofenkopf 12 und einen Ofenunterbau 14 auf, die über eine Gelenkvorrichtung 16 miteinander verbunden sind. Der Ofenkopf 12 weist in an sich bekannter Weise eine Brennkammer 18 auf, die für die Aufnahme einer Muffel 20 bestimmt ist.

Die Gelenkvorrichtung ist erfindungsgemäß in besonderer Weise ausgebildet und weist einen mit dem Ofenunterbau 14 verbundenen Rahmenschenkel 22, einen unteren beweglichen Schenkel 24 und einen oberen beweglichen Schenkel 26 auf. Die beiden Schenkel 24 und 26 sind je mit Gelenkachsen 30 und 32 mit dem Rahmenschenkel 22 verbunden.

Die Gelenkvorrichtung 16 weist ferner einen Kopfschenkel 34 auf, der über Gelenkachsen 36 und 38 mit dem beweglichen Schenkel 24 bzw. dem beweglichen Schenkel 26 verbunden ist. Der Kopfschenkel 34 ist mit dem Ofenkopf 12 verbunden, und zwar in dem hier dargestellten ersten Ausführungsbeispiel fest verbunden.

In der Darstellung gemäß Fig. 1 ist sowohl die Öffnungsposition als auch die Schließposition des Ofenkopfes 12 übereinander dargestellt.

Der Ofenkopf 12 ist mit der erfindungsgemäßen Gelenkvorrichtung 16 um eine virtuelle Schwenkachse 40 schwenkbar, die deutlich beabstandet von dem Ofen 10 zu liegen kommt. Durch die Realisierung dieser virtuellen Schwenkachse ergibt sich auch bei geöffnetem Ofenkopf 12 ein recht geringer Schwenkwinkel von lediglich etwa 18°.

In Berewich der Gelenkvorrichtung 16 ist eine Spannfeder 41 gelagert. Die Spannfeder spannt den Kopfschenkel nach oben vor und dient dazu, das Gewicht des Ofenkopfes zu kompensieren, damit ein Motor 42 mit vergleichsweise geringer Antriebkraft den Ofenkopf 12 öffnen und schließen kann.

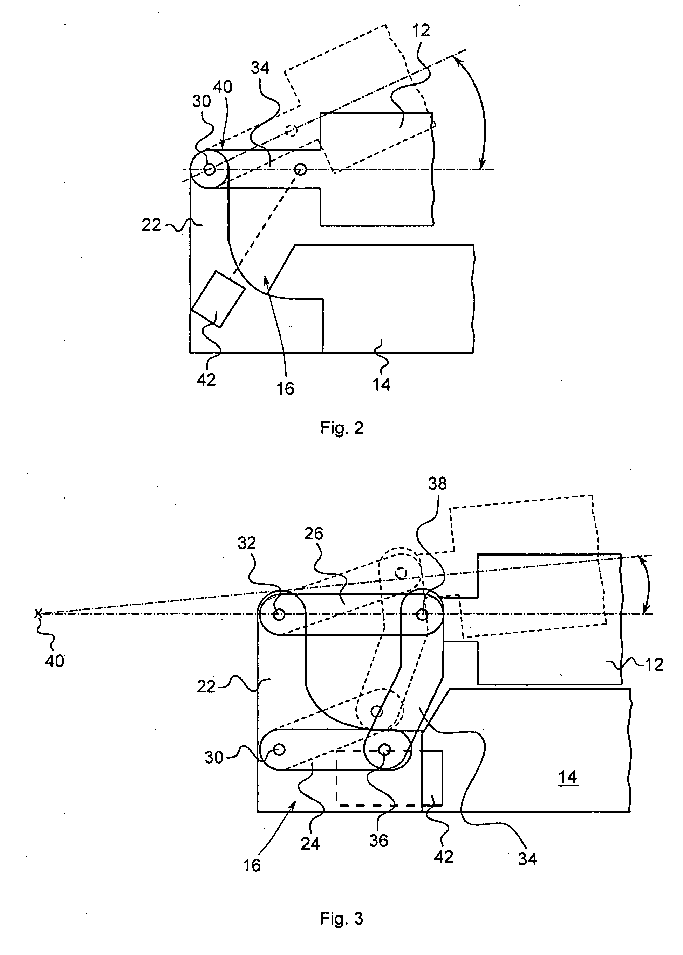

Aus Fig. 2 ist schematisch eine Gelenkvorrichtung eines herkömmlichen Brennofens ersichtlich. Gleiche Bezugszeichen weisen hier wie auch in den weiteren Figuren auf gleiche Teile hin. Hier fällt die Schwenkachse 40 mit der Gelenkachse 22 zusammen, und der Rahmenschenkel 22 ist über die Gelenkachse 30 direkt mit dem Kopfschenkel 34 verbunden. Ein Motor 42 ist seitlich neben der Gelenkvorrichtung 16 angeordnet und wirkt mit einer Spindel auf den Kopfschenkel 34.

Demgegenüber ist in Fig. 3 eine erfindungsgemäße Gelenkvorrichtung 16 dargestellt. Die Darstellung zeigt wiederum in durchgezogener Form die geschlossene Stellung des Ofenkopfes und in gestrichelter Form die geöffnete Stellung. Die Ausgestaltung der Gelenkvorrichtung nach der Art eines konvexen Vierecks mit den Gelenkachsen 30, 32, 36, 38 als Eckpunkte des Vierecks ist aus Fig. 3 gut ersichtlich. Während die Schwenkachse 40 in der Darstellung gemäß Fig. 3 nur etwas außerhalb des Ofens dargestellt ist, versteht es sich, dass die tatsächliche Dimensionierung eher der gemäß Fig. 1 entspricht.

Die Gelenkvorrichtung 16 ist in Fig. 1 und Fig. 3 in einfacher Form dargestellt.

In modifizierter Ausgestaltung besteht die Gelenkvorrichtung 16 aus zwei zueinander symmetrischen und einander entsprechenden Gelenkanordnungen. Dann ist vor oder hinter der Zeichnungsebene zusätzlich zu der dargestellten Gelenkanordnung eine weitere entsprechende Gelenkanordnung ausgebildet, so dass die beiden in Richtung der Schwenkachse voneinander beabstandeten Gelenkanordnungen insgesamt die Gelenkvorrichtung 16 bilden.

Hierbei sind die beweglichen Schenkel 24 und 26 bevorzugt doppelt vorgesehen, und der Rahmenschenkel 22 ist in Form eines U ausgebildet, so dass der Mittelschenkel des U sich senkrecht erstreckt und die Seitenschenkel des U je die beiden Gelenkachsen 30 und 32 aufnehmen.

Entsprechendes gilt für den Kopfschenkel 38, der ebenfalls beide Gelenkanordnungen miteinander verbindet und ebenfalls im wesentlichen im Horizontalschnitt U-förmig ausgebildet ist. Auch hier erstrecken sich dann die Gelenkachsen 36 und 38 in den Seitenschenkel des U. Zwischen den Rahmenschenkeln 30, 32 ist der Motor 42 aufgenommen, so dass sich insgesamt ein sehr kompakter Aufbau der Gelenkvorrichtung 16 ergibt.

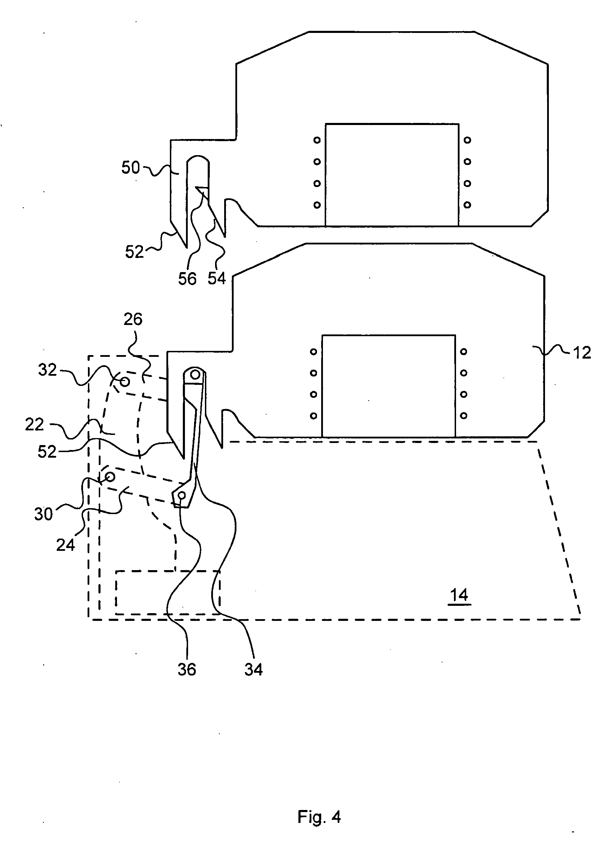

Aus Fig. 4 ist eine weiter modifizierte Ausgestaltung eines erfindungsgemäßen Brennofens ersichtlich. Auch hier erstreckt sich der Kopfschenkel 34 bei geschlossenem Ofenkopf 12 im wesentlichen senkrecht. Er ist jedoch nicht direkt mit dem Ofenkopf 12 verbunden. Vielmehr ist ein Formteil 50 vorgesehen, das fest mit dem Ofenkopf 12 verbunden ist und im wesentlichen die Form eines umgekehrten U aufweist. Dessen Seitenschenkel laufen an Schrägflächen 52, 54 aus, die Einführschrägen gegenüber dem Kopfschenkel 34 bilden, und diesen übergreifen.

Für die Verriegelung zwischen dem Kopfschenkel 34 und dem Formteil 50 ist eine Verriegelungsnase 56 vorgesehen, die an dem Formteil 50 beweglich gelagert ist und in eingerastetem Zustand eine entsprechende Öffnung in dem Kopfschenkel 34 durchtritt, um so eine sichere Verbindung zwischen dem Kopfschenkel 34 und dem Ofenkopf 12 zu ermöglichen.

## Patentansprüche

1. Dental-Brennofen oder -Pressofen mit einem Ofenunterbau (14), der eine Auflagefläche für wenigstens ein Dentalrestaurationsteil aufweist, einem Ofenkopf (12), der über eine am Ofenunterbau (14) befestigten Gelenkvorrichtung (16) mit dem Ofenunterbau (14) in Verbindung steht und über diese gegenüber dem Ofenunterbau (14) schwenkbar ist, wobei das Schwenken um eine Schwenkachse (40) erfolgt, die sich im wesentlichen parallel zur Auflagefläche erstreckt, sowie einem Motor (42), der auf die Gelenkvorrichtung (16) zur Schwenkbewegung des Ofenkopfes (12) wirkt, **dadurch gekennzeichnet, dass** die Schwenkachse (40) sich ausserhalb des Ofenkopfes (12) und außerhalb der Gelenkvorrichtung (16) erstreckt.

2. Ofen nach Anspruch 1, **dadurch gekennzeichnet, dass** die Gelenkvorrichtung (16) mindestens drei, insbesondere vier, gelenkig miteinander verbundene Schenkel (22, 24, 26, 34) aufweist und dass zwischen einander benachbarten Schenkeln eine erste, eine zweite, eine dritte und insbesondere eine vierte Gelenkachse (30, 32, 36, 38) ausgebildet ist.

3. Ofen nach Anspruch 1 oder 2, **dadurch gekennzeichnet, dass** die Gelenkvorrichtung (16) mehrere Schenkel aufweist, von denen einer, der Rahmenschenkel (22), fest mit dem Ofenunterbau (14) in Verbindung steht und an einem anderen, dem Kopfschenkel (34), der Ofenkopf (12) befestigbar ist oder an diesem befestigt ist.

4. Ofen nach Anspruch 1 oder 2, **dadurch gekennzeichnet, dass** die Gelenkvorrichtung (16) mehrere Schenkel aufweist, und dass ein mit dem Ofenkopf (12) verbundener Kopfschenkel als der dem Ofenkopf (12) zugewandter Schenkel (34) ausgebildet ist.

5. Ofen nach einem der vorhergehenden Ansprüche, **dadurch gekennzeichnet, dass** die Gelenkvorrichtung (16) mehrere Schenkel aufweist, die gelenkig miteinander verbunden sind, und dass ein unterbaufester Rahmenschenkel (22) gelenkig mit zwei Zwischenschenkeln (24, 26) verbunden ist, wobei die Gelenkachsen (30, 32) zu diesen hin voneinander beabstandet sind, insbesondere in vertikaler Richtung beabstandet, und dass die anderen Gelenkachsen (36, 38) der Zwischenschenkel (24, 26) mit einem Ofenkopf-festen Schenkel (34) verbunden sind.

6. Ofen nach einem der vorhergehenden Ansprüche, **dadurch gekennzeichnet, dass** die Gelenkvorrichtung (16) zwei voneinander in horizontaler Richtung und insbesondere in der Richtung parallel zur Schwenkachse (40) voneinander beabstandete Gelenkanordnungen aufweist, die je mehrere Schenkel aufweisen.

7. Ofen nach Anspruch 6, **dadurch gekennzeichnet, dass** zwischen Gelenkanordnungen der Gelenkvorrichtung (16) der Motor (42) aufgenommen ist, mit welchem der Ofenkopf (12) verschwenkbar ist.

8. Ofen nach einem der vorhergehenden Ansprüche, **dadurch gekennzeichnet, dass** in oder an der Gelenkvorrichtung (16) eine Spannfeder (41) aufgenommen ist, die gegen das Gewicht des Ofenkopfes (12) wirkt und in an sich bekannter Weise dieses im wesentlichen kompensiert.

9. Ofen nach Anspruch 8, **dadurch gekennzeichnet, dass** die Spannfeder (41) aus zwei Einzel-Spannfedern besteht, die im Inneren der Gelenkvorrichtung (16) aufgenommen sind, insbesondere zwischen den Anordnungen der Gelenkvorrichtung (16).

10. Ofen nach einem der vorhergehenden Ansprüche, **dadurch gekennzeichnet, dass** die Gelenkvorrichtung (16) mehrere Schenkel aufweist, die in der Art eines konvexen Vierecks miteinander verbunden sind.

11. Ofen nach einem der vorhergehenden Ansprüche, **dadurch gekennzeichnet, dass** der Ofenkopf (12) an der Gelenkvorrichtung (16) lösbar befestigt ist und die Befestigung mit Hilfe von steckbaren Formteilen (50) erfolgt, die über eine federbelastete Verriegelungsnase (56) gesichert sind.

12. Ofen nach Anspruch 11, **dadurch gekennzeichnet, dass** ein ofenkopffestes Formteil im wesentlichen die Form eines umgekehrten U aufweist, dessen Seitenschenkel in Schrägflächen (52, 54) auslaufen.

13. Ofen nach einem der vorhergehenden Ansprüche, **dadurch gekennzeichnet, dass** eine Abtriebswelle des Motors (42) als Spindel ausgebildet ist und mit einem Schneckengetriebe zusammenwirkt, das seinerseits die Gelenkvorrichtung (16) antreibt.

14. Ofen nach einem der vorhergehenden Ansprüche, **dadurch gekennzeichnet, dass** der Abstand der Schwenkachse (40) von dem Ofengehäuse das 0,1 bis 2-fache der größten Länge des Ofengehäuses beträgt und/oder der Öffnungswinkel zwischen der Unterseite des Ofenkopfes (12) und der Oberseite des Ofenunterbaus (14) bei geöffnetem Ofenkopf (12) 5° bis 20° beträgt.

## Claims

1. Dental firing furnace or dental press furnace comprising a furnace base (14) which is provided with a supporting surface for at least one dental restoration part, a furnace head (12) which is connected to the furnace base (14) via a joint device (16) attached to the furnace base (14) and which is pivotable relative to the furnace base (14) via said device, wherein pivoting takes place about a pivot axis (40) which extends substantially parallel to the supporting surface, as well as a motor (42) which acts on the joint device (16) for the pivotable movement of the furnace head (12), **characterized in that** the pivot axis (40) extends outside of the furnace head (12) and outside of the joint device (16).

2. Furnace according to claim 1, **characterized in that** the joint device (16) comprises at least three, in particular four, legs (22, 24, 26, 34) which are connected to each other via joints, and **in that** between adjacent legs a first, a second, a third and in particular a fourth joint axis (30, 32, 36, 38) is formed.

3. Furnace according to claim 1 or 2, **characterized in that** the joint device (16) comprises several legs, wherein one of which, the frame leg (22), is firmly connected to the furnace base (14), and to another one, the head leg (34), the furnace head (12) can be attached or is attached.

4. Furnace according to claim 1 or 2, **characterized in that** the joint device (16) comprises several legs, and **in that** a head leg which is connected to the furnace head (12) is formed as the leg (34) facing the furnace head (12).

5. Furnace according to any of the foregoing claims, **characterized in that** the joint device (16) is provided with several legs which are connected to each other via joints and that a frame leg (22) which is fixed to the base is connected to two intermediate legs (24, 26) via joints wherein the joint axes (30, 32) are spaced apart from each other towards them, in particular spaced apart in a vertical direction, and **in that** the other joint axes (36, 38) of the intermediate legs (24, 26) are connected to a leg (34) which is fixed to the furnace head.

6. Furnace according to any of the foregoing claims, **characterized in that** the joint device (16) is provided with two joint arrangements which are spaced apart from each other in a horizontal direction and in particular spaced apart from each other in the direction parallel to the pivot axis (40) and which are provided with several legs each.

7. Furnace according to claim 6, **characterized in that** between the joint arrangements of the joint device (16) the motor (42) is received which is used to pivot the furnace head (12).

8. Furnace according to any of the foregoing claims, **characterized in that** in or at the joint device (16) a tension spring (41) is received which acts against the weight of the furnace head (12) and which substantially compensates for this in a way known.

9. Furnace according to claim 8, **characterized in that** the tension spring (41) consists of two individual tension springs which are received in the interior of the joint device (16), in particular between the arrangements of the joint device (16).

10. Furnace according to any of the foregoing claims, **characterized in that** the joint device (16) is provided with several legs which are connected to each other in the form of a convex square.

11. Furnace according to any of the foregoing claims, **characterized in that** the furnace head (12) is releasably connected to the joint device (16) and **in that** the fixing is carried out using pluggable molded parts (50) which are secured via a spring-loaded locking nose (56).

12. Furnace according to claim 11, **characterized in that** a molded part fixed to the furnace head has substantially the shape of a U turned upside down whose side legs end in angular faces (52, 54).

13. Furnace according to any of the foregoing claims, **characterized in that** a driven shaft of the motor (42) is formed as a spindle and interacts with a worm gear which in turn drives the joint device (16).

14. Furnace according to any of the foregoing claims, **characterized in that** the distance of the pivot axis (40) to the housing of the furnace is 0.1 to 2 times the largest length of the furnace housing and/or **in that** the opening angle between the bottom of the furnace head (12) and the top of the furnace base (14) is 5° to 20° when the furnace head (12) is open.

## Revendications

1. Four de cuisson ou de pressage dentaire avec une embase de four (14) présentant une surface d'appui pour au moins une pièce de restauration dentaire, une tête de four (12) reliée à l'embase de four (14) par un dispositif d'articulation (16) fixé contre l'embase de four (14) et permettant à la tête de four de pivoter par rapport à l'embase de four (14), le pivotement ayant lieu autour d'un axe de pivotement (40) s'étendant sensiblement parallèlement à la surface d'appui, ainsi qu'un moteur (42) agissant sur le dispositif d'articulation (16) pour le pivotement de la tête de four (12), **caractérisé en ce que** l'axe de pivotement (40) s'étend hors de la tête de four (12) et hors du dispositif d'articulation (16).

2. Four selon la revendication 1 , **caractérisé en ce que** le dispositif d'articulation (16) comporte au moins trois, en particulier quatre branches (22, 24, 26, 34) raccordées par articulation entre elles, et **en ce qu'**un premier, un deuxième, un troisième, et en particulier un quatrième axes d'articulation (30, 32, 36, 38) sont formés entre des branches adjacentes.

3. Four selon la revendication 1 ou 2, **caractérisé en ce que** le dispositif d'articulation (16) comporte plusieurs branches dont l'une, la branche de cadre (22), est fixement raccordée à l'embase de four (14), et **en ce que** la tête de four (12) peut être fixée à une autre branche, la branche de tête (34), ou est fixée à celle-ci.

4. Four selon la revendication 1 ou 2, **caractérisé en ce que** le dispositif d'articulation (16) comporte plusieurs branches, et **en ce qu'**une branche de tête raccordée à la tête de four (12) est réalisée comme branche (34) dirigée vers la tête de four (12).

5. Four selon l'une des revendications précédentes, **caractérisé en ce que** le dispositif d'articulation (16) comporte plusieurs branches raccordées par articulation entre elles, et **en ce qu'**une branche de cadre (22) fixe sur l'embase est raccordée par articulation à deux branches intermédiaires (24, 26), les axes d'articulation (30, 32) de celles-ci étant espacés l'un de l'autre, en particulier dans la direction verticale, et **en ce que** les autres axes d'articulation (36, 38) des branches intermédiaires (24, 26) sont raccordés à une branche (34) fixe sur la tête de four.

6. Four selon l'une des revendications précédentes, **caractérisé en ce que** le dispositif d'articulation (16) comporte deux mécanismes articulés espacés l'un de l'autre dans la direction horizontale et en particulier dans la direction parallèle à l'axe de pivotement (40), lesquels présentent plusieurs branches chacun.

7. Four selon la revendication 6, **caractérisé en ce que** le moteur (42) au moyen duquel la tête de four (12) peut pivoter est logé entre les mécanismes articulés du dispositif d'articulation (16).

8. Four selon l'une des revendications précédentes, **caractérisé en ce qu'**un ressort de tension (41) agissant contre le poids de la tête de four (12) et compensant celui-ci de manière connue en soi est logé dans ou sur le dispositif d'articulation (16).

9. Four selon la revendication 8, **caractérisé en ce que** le ressort de tension (41) est constitué de deux ressorts de tension individuels logés à l'intérieur du dispositif d'articulation (16), en particulier entre les mécanismes du dispositif d'articulation (16).

10. Four selon l'une des revendications précédentes, **caractérisé en ce que** le dispositif d'articulation (16) comporte plusieurs branches raccordées entre elles à la manière d'un quadrilatère convexe.

11. Four selon l'une des revendications précédentes, **caractérisé en ce que** la tête de four (12) est fixée de manière amovible au dispositif d'articulation (16), et **en ce que** la fixation est réalisée au moyen de pièces moulées enfichables (50) fixées au moyen d'un ergot de verrouillage (56) contraint par ressort.

12. Four selon la revendication 11, **caractérisé en ce qu'**une pièce moulée fixe contre la tête de four présente sensiblement la forme d'un U inversé, dont les branches latérales se terminent en formant des surfaces obliques (52, 54).

13. Four selon l'une des revendications précédentes, **caractérisé en ce qu'**un arbre de sortie du moteur (42) est réalisé comme une broche et coopère avec une vis sans fin qui entraîne elle-même le dispositif d'articulation (16).

14. Four selon l'une des revendications précédentes, **caractérisé en ce que** l'espacement entre l'axe de pivotement (40) et l'enceinte du four représente de 0,1 à 2 fois la longueur de ladite enceinte de four, et/ou l'angle d'ouverture entre la face inférieure de la tête de four (12) et la face supérieure de l'embase de four (14) est compris entre 5° et 20° quand la tête de four (12) est ouverte.
